# EUROPEAN PATENT APPLICATION

(11) **EP 4 296 198 A1**
(43) Date of publication of application: **27.12.2023**
(21) Application number: 22827696.0
(22) Date of filing: 24.06.2022
(51) Int. Cl.: B65D 88/06, B65D 90/02

(54) **STORAGE TANK AND TANK TRUCK HAVING SAME**

(30) Priority: 25.06.2021 CN 202121436549 U
(71) Applicant: CRRC Qiqihar Rolling Stock Co., Ltd., Qiqihar, Heilongjiang 161002 (CN)
(72) Inventor: GUO, Jun, Qiqihar, Heilongjiang 161002 (CN); MA, Qiaoyan, Qiqihar, Heilongjiang 161002 (CN); XU, Chunyue, Qiqihar, Heilongjiang 161002 (CN); LUO, Yanping, Qiqihar, Heilongjiang 161002 (CN); HOU, Tianhua, Qiqihar, Heilongjiang 161002 (CN); YIN, Jing, Qiqihar, Heilongjiang 161002 (CN); LI, Tao, Qiqihar, Heilongjiang 161002 (CN)
(74) Representative: Dehns
(86) International application number: PCT/CN2022/101139
(87) International publication number: WO 2022/268204

(57) **Abstract**

Provided are a storage tank and a tank truck including the storage tank. The storage tank includes: a tank body (10); a fixing frame (20), supporting two ends of the tank body; and a reinforcing ring (30), arranged on a circumferential outer side of the tank body. A projection of an outer surface of the reinforcing ring on a cross section of the tank body is located within a projection of an outer surface of the fixing frame on the cross section of the tank body, and a cutting plane (1) is arranged on the outer surface of the reinforcing ring. The storage tank may solve the problem that the maximum storage capacity is difficult to break through.

## Description

### Cross-Reference to Related Application

The present invention claims priority to Chinese Patent Application No. 202121436549.7 filed to the China National Intellectual Property Administration on June 25, 2021 and entitled "Storage Tank and Tank Truck with Storage Tank ", the invention of which is hereby incorporated by reference in its entirety.

### Technical Field

The present invention relates to the field of liquid storage, and in particular to a storage tank and a tank truck with the storage tank.

### Background

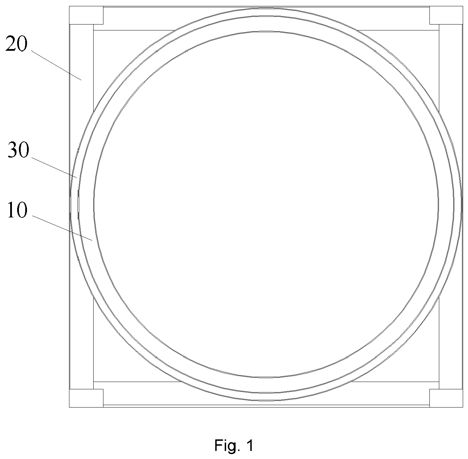

At present, a tank body of a storage tank for storing liquid or gas needs to withstand relatively high pressure under normal working conditions, so the tank body needs relatively high strength. If the strength of the tank body is improved by increasing the wall thickness of the tank body, the self-weight of the tank body may be larger and the carrying capacity of the tank body may be reduced. As shown in Fig. 1, in order to reduce the self-weight of the tank body, at present, the strength requirement of the tank body is generally satisfied by arranging a reinforcing ring on an outer side of the tank body. The reinforcing ring is an annular structure arranged on the circumferential outer side of the tank body. For the tank body fixed by a fixing frame, the outer wall of the reinforcing ring arranged on the tank body cannot protrude from the outer wall of the fixing frame, so a maximum outer diameter of the tank body is limited by the fixing frame and the reinforcing ring, causing the maximum storage capacity of the tank body difficult to break through, and affecting the economy of the tank body.

### Summary

The present invention mainly aims to provide a storage tank and a tank truck with the storage tank, so as to solve the problem that the maximum storage capacity of the storage tank in a related art is difficult to break through.

In order to achieve the above objective, according to one aspect of the present invention, provided is a storage tank, including: a tank body; a fixing frame, supporting two ends of the tank body; and a reinforcing ring, arranged on a circumferential outer side of the tank body. A projection of an outer surface of the reinforcing ring on a cross section of the tank body is located within a projection of an outer surface of the fixing frame on the cross section of the tank body, and a cutting plane is arranged on the outer surface of the reinforcing ring.

In some embodiments, the fixing frame is polygonal, and a plurality of cutting planes are arranged in one-to-one correspondence with middle parts of frame sides of the fixing frame.

In some embodiments, the cutting plane is flush with the outer surface of the fixing frame.

In some embodiments, a minimum distance between the cutting plane and an inner surface of the reinforcing ring is greater than or equal to 5 mm.

In some embodiments, an angle α between connection lines from two ends of the cutting plane to a center of the reinforcing ring is less than or equal to 30°.

In some embodiments, a plurality of reinforcing rings are arranged at intervals in an axial direction of the tank body.

In some embodiments, a distance between two adjacent reinforcing rings at an end part of the tank body is greater than or equal to a distance between two adjacent reinforcing rings at a middle part of the tank body.

In some embodiments, the reinforcing ring includes a first vertical plate and a second vertical plate oppositely arranged in an axial direction of the tank body and a connecting plate arranged between the first vertical plate and the second vertical plate, and at least part of an outer surface of the connecting plate forms the cutting plane.

In some embodiments, the reinforcing ring includes a cutting segment and an arc segment, the cutting plane is located on the cutting segment, and the cutting segment is in welded connection with the arc segment.

According to another aspect of the present invention, provided is a tank truck, including: a truck body; and a storage tank, arranged on the truck body, the storage tank being the above storage tank.

By applying the technical solution of the present invention, the reinforcing ring is arranged on the circumferential outer side of the tank body, and the outer contour of the reinforcing ring needs to be located within the outer contour of the fixing frame. In the case where the above condition needs to be satisfied, the narrower the width of the reinforcing ring is, the more favorable it is to increase the diameter of the tank body. In the present invention, the cutting plane is arranged on the outer surface of the reinforcing ring, and the original reinforcing ring with the outer surface being arc-shaped is cut to form the cutting plane adapted to the outer contour of the reinforcing ring, so that the width of the reinforcing ring becomes smaller, and correspondingly the diameter of the tank body is increased, thereby achieving the effect of expanding the volume of the tank body. The above structure reduces the width of the reinforcing ring in the radial direction while ensuring the continuity of the reinforcing ring by cutting a part of the reinforcing ring, thereby obtaining a larger accommodation space for the tank body.

### Brief Description of the Drawings

The drawings consisting a part of the invention are used to provide further understanding of the present invention. The schematic embodiments of the invention and description thereof are used for explaining the invention and do not limit the invention improperly. In the drawings,
Fig. 1 illustrates a schematic cross-sectional structural diagram of a storage tank in a prior art;
Fig. 2 illustrates a schematic cross-sectional structural diagram of a storage tank according to the present invention;
Fig. 3 illustrates an enlarged schematic structural diagram of part A of the storage tank in Fig. 2;
Fig. 4 illustrates a schematic cross-sectional structural diagram of an arc segment of a reinforcing ring of the storage tank in Fig. 2; and
Fig. 5 illustrates a schematic cross-sectional structural diagram of a cutting segment of a reinforcing ring of the storage tank in Fig. 2.

Herein, the above drawings include the following reference numbers:
1, cutting plane; 10, tank body; 20, fixing frame; 30, reinforcing ring; 31, first vertical plate; 32, second vertical plate; 33, connecting plate; 34, cutting segment; and 35, arc segment.

### Detailed Description of the Embodiments

It is to be noted that the embodiments of the present invention and the features in the embodiments may be combined with each other without conflict. The present invention will be described in detail with reference to the accompanying drawings and embodiments.

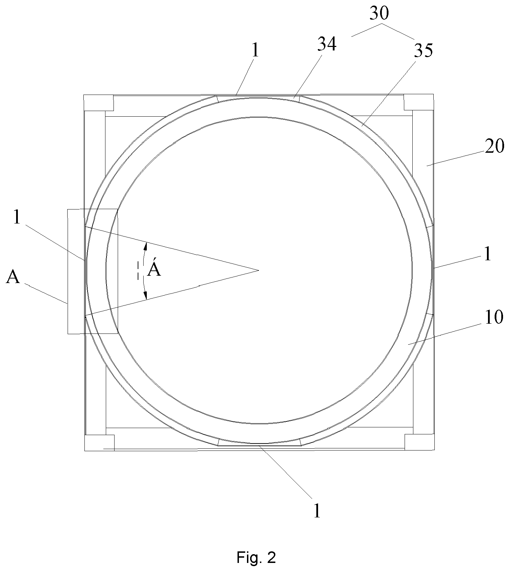

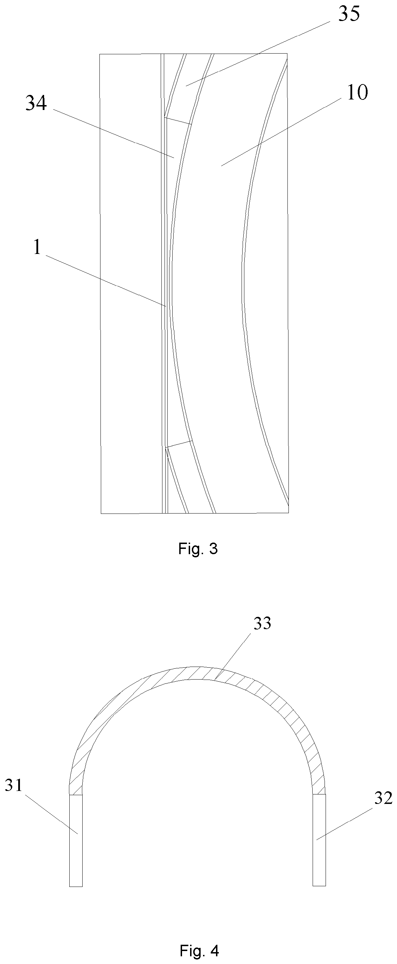

As shown in Figs. 2 and 3, the storage tank of the present embodiment includes a tank body 10, a fixing frame 20 and a reinforcing ring 30. The fixing frame 20 supports two ends of the tank body 10. The reinforcing ring 30 is arranged on a circumferential outer side of the tank body 10. A projection of an outer surface of the reinforcing ring 30 on a cross section of the tank body 10 is located within a projection of an outer surface of the fixing frame 20 on the cross section of the tank body 10, and a cutting plane 1 is arranged on the outer surface of the reinforcing ring 30.

By applying the technical solution of the present embodiment, the reinforcing ring 30 is arranged on the circumferential outer side of the tank body 10, and the outer contour of the reinforcing ring 30 needs to be located within the outer contour of the fixing frame 20. In the case where the above condition needs to be satisfied, the narrower the width of the reinforcing ring 30 is, the more favorable it is to increase the diameter of the tank body 10. In the present invention, the cutting plane 1 is arranged on the outer surface of the reinforcing ring 30, and the original reinforcing ring 30 with the outer surface being arc-shaped is cut to form the cutting plane 1 adapted to the outer contour of the reinforcing ring 30, so that the width of the reinforcing ring 30 becomes smaller, and correspondingly the diameter of the tank body 10 is increased, thereby achieving the effect of expanding the volume of the tank body 10. The above structure reduces the width of the reinforcing ring 30 in the radial direction while ensuring the continuity of the reinforcing ring 30 by cutting a part of the reinforcing ring 30, thereby obtaining a larger accommodation space for the tank body 10.

As shown in Figs. 2 and 3, in the present embodiment, the fixing frame 20 is polygonal, and a plurality of cutting planes 1 are arranged in one-to-one correspondence with middle parts of frame sides of the fixing frame 20. Specifically, the fixing frame 20 for fixing the tank body 10 is generally a polygonal structure, and since the tank body 10 is generally a circular structure, the fixing frame 20 is generally a regular polygon, more commonly a regular quadrilateral. Taking the fixing frame 20 as a quadrilateral as an example, in order to cause the reinforcing ring 30 to be adapted to the fixing frame 20, two opposite cutting planes 1 may be cut out in the vertical direction of the reinforcing ring 30, and then two opposite cutting planes 1 are cut out in the horizontal direction of the reinforcing ring 30, so that the four cutting planes 1 are respectively parallel to corresponding outer edges of the fixing frame 20. Such a structure not only facilitates ensuring the strength of the reinforcing ring 30, but also causes the reinforcing ring 30 to be adapted to the outer contour of the fixing frame 20, thereby reducing the width of the reinforcing ring 30 in the radial direction, and accordingly the diameter of the tank body 10 is increased.

It is to be noted that, in another embodiment not illustrated in the figures, the fixing frame 20 may also be a regular octagon. Correspondingly, two opposite cutting planes 1 need to be cut out in the vertical direction of the reinforcing ring 30, and then two opposite cutting planes 1 are cut out in the horizontal direction of the reinforcing ring 30, so that the four cutting planes 1 are respectively parallel to the corresponding outer edges of the fixing frame 20. Thus, the outer contour of the reinforcing ring 30 is adapted to the outer contour of the regular octagonal fixing frame 20.

As shown in Figs. 2 and 3, in the present embodiment, the cutting plane 1 is flush with the outer surface of the fixing frame 20. In the above structure, after the reinforcing ring 30 is cut, the width thereof in the radial direction is a fixed value. Therefore, the closer the cutting plane 1 is to the outer surface of the fixing frame 20, the larger the arrangement space for the tank body 10 is. Therefore, when the cutting plane 1 is flush with the outer surface of the fixing frame 20, the largest arrangement space may be obtained for the tank body 10. In the present embodiment, four cutting planes 1 are provided, and when the four cutting planes 1 are all flush with the corresponding outer surfaces of the fixing frame 20, the tank body 10 may have the largest diameter.

In order to ensure the continuity of the reinforcing ring 30, the reinforcing ring 30 cannot be completely cut off when the cutting plane is processed, and the reinforcing ring needs to be kept at a certain height. The purpose of ensuring the continuity of the reinforcing ring 30 is to enable, when the reinforcing ring 30 is subject to external force, the external force to be transmitted to the entire reinforcing ring 30, and the transmission of the force is not blocked somewhere. If the transmission of the force is blocked at a certain place on the reinforcing ring 30, the stress here is prone to being too concentrated, and the reinforcing ring 30 is prone to being broken at this place. Therefore, to ensure the continuity of the reinforcing ring 30 is to ensure the strength of the reinforcing ring 30.

As shown in Figs. 2 and 3, in the present embodiment, a minimum distance L1 between the cutting plane 1 and an inner surface of the reinforcing ring 30 is greater than or equal to 5 mm. The above structure ensures the continuity of the reinforcing ring 30, accordingly ensures the strength of the reinforcing ring 30, and further improves the strength of the entire storage tank. The minimum distance L1 between the cutting plane 1 and the inner surface of the reinforcing ring 30 may be 5 mm, 7 mm or 9 mm. Preferably, the minimum distance L1 between the cutting plane 1 and the inner surface of the reinforcing ring 30 is 5 mm.

As shown in Fig. 2, in the present embodiment, an angle α between connection lines from two ends of the cutting plane 1 to a center of the reinforcing ring 30 is less than or equal to 30° . In the above structure, the smaller the angle between the connection lines from two ends of the cutting plane 1 to the center of the reinforcing ring 30 is, the shorter the cutting plane 1 is, and the larger the remaining width of the reinforcing ring 30 after being cut is. The above structure ensures the continuity of the reinforcing ring 30 by limiting the angle between the connection lines from two ends of the cutting plane 1 to the center of the reinforcing ring 30. The angle α between the connection lines from two ends of the cutting plane 1 to the center of the reinforcing ring 30 may be 30° , 25° or 20° . Preferably, the angle α between the connection lines from two ends of the cutting plane 1 to the center of the reinforcing ring 30 is 30° .

It is to be noted that, in the present embodiment, a plurality of reinforcing rings 30 are arranged at intervals in an axial direction of the tank body 10. The above structure may enhance the strength of the tank body 10, and then improve the strength of the entire storage tank.

Further, in the present embodiment, a distance between two adjacent reinforcing rings 30 at an end part of the tank body 10 is greater than or equal to a distance between two adjacent reinforcing rings 30 at a middle part of the tank body 10. In the above structure, two ends of the tank body 10 are fixed by the fixing frame 20, so a joint between the tank body 10 and the fixing frame 20 bears relatively large stress. Increasing the density of the reinforcing ring 30 in the position that needs to bear greater stress and its vicinity may further improve the strength of the entire storage tank. The above structure optimizes the arrangement of the reinforcing rings 30 according to the stress distribution of the storage tank, thereby improving the strength of the storage tank.

Specifically, the tank body 10 has two opposite ends in the axial direction, a plurality of reinforcing rings 30 are arranged at intervals in the axial direction of the tank body 10, 2 to 5 reinforcing rings 30 are arranged at the end part of the tank body 10, and 3 to 6 reinforcing rings 30 are arranged at the middle part of the tank body 10. The distance between two adjacent reinforcing rings 30 at the end part of the tank body 10 is smaller than the distance between two adjacent reinforcing rings 30 at the middle part of the tank body 10.

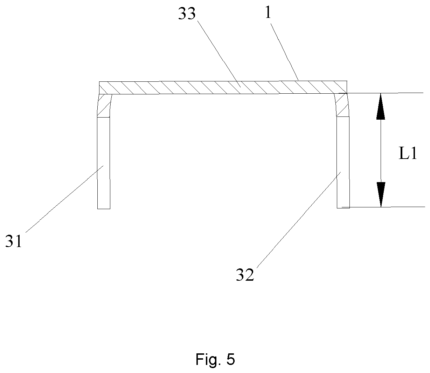

As shown in Figs. 2 to 5, in the present embodiment, the reinforcing ring 30 includes a first vertical plate 31 and a second vertical plate 32 oppositely arranged in the axial direction of the tank body 10 and a connecting plate 33 arranged between the first vertical plate 31 and the second vertical plate 32, and at least part of the outer surface of the connecting plate 33 forms the cutting plane 1. In the above structure, the first vertical plate 31 and the second vertical plate 32 are welded to the tank body 10, and the connecting plate 33 is located between the first vertical plate 31 and the second vertical plate 32. The connecting plate 33 includes an arc plate and a straight plate, and the outer surface of the straight plate forms the cutting plane 1. Specifically, C-shaped steel may be used to process the reinforcing ring 30 during processing. When the cutting plane 1 is processed, part of the original arc plate of the C-shaped steel is cut off and replaced with a straight metal plate to be re-welded between the first vertical plate and the second vertical plate, and then the newly welded straight metal plate is welded to the original arc plate to form a new connecting plate. The above structure is simple and facilitates the processing of the reinforcing ring 30.

As shown in Figs. 2 to 5, in the present embodiment, the reinforcing ring 30 includes a cutting segment 34 and an arc segment 35, the cutting plane 1 is located on the cutting segment 34, and the cutting segment 34 is in welded connection with the arc segment 35. In the above structure, when the reinforcing ring 30 is processed, segmental processing may also be adopted. Using the C-shaped steel as a base material, the reinforcing ring 30 is processed in segments, then each segment of the reinforcing ring 30 is respectively welded to the tank body 10 and adjacent cutting segment 34 and arc segment 35 are welded, and finally the entire reinforcing ring 30 is formed. This manner causes the installation of the reinforcing ring 30 simple and easy to operate.

The present invention also provides a tank truck. The tank truck of the present invention includes a truck body and a storage tank. The storage tank is arranged on the truck body, and the storage tank is the above storage tank. In the above structure, since the storage tank has the advantage of large carrying capacity, the truck with the storage tank also has the above advantage.

It is to be noted that the reinforcement ring 30 serves the purpose of increasing the volume of the storage tank on the basis of satisfying the strength of the storage tank. Taking a 2-tank container of a 40-foot series as an example, the barrel diameter of a shell may be increased by 80 mm, the volume of an inner container may be increased by 5 m³, and the storage and transportation capacity of liquefied natural gas may be increased by 2000 kg, which improves the economy of storage and transportation of a cryogenic medium.

The above is only the preferred embodiments of the present invention and is not used to limit the present invention. For those skilled in the art, there may be various changes and variations in the present invention. Any modifications, equivalent replacements, improvements and the like made within the spirit and principle of the present invention shall fall within the scope of protection of the application.

## Claims

1. A storage tank, comprising:
a tank body (10);
a fixing frame (20), supporting two ends of the tank body (10); and
a reinforcing ring (30), arranged on a circumferential outer side of the tank body (10), wherein a projection of an outer surface of the reinforcing ring (30) on a cross section of the tank body (10) is located with a projection of an outer surface of the fixing frame (20) on the cross section of the tank body (10), and a cutting plane (1) is arranged on the outer surface of the reinforcing ring (30).

2. The storage tank according to claim 1, wherein the fixing frame (20) is polygonal, and a plurality of cutting planes (1) are arranged in one-to-one correspondence with middle parts of frame sides of the fixing frame (20).

3. The storage tank according to claim 1, wherein the cutting plane (1) is flush with the outer surface of the fixing frame (20).

4. The storage tank according to claim 1, wherein a minimum distance L1 between the cutting plane (1) and an inner surface of the reinforcing ring (30) is greater than or equal to 5 mm.

5. The storage tank according to claim 1, wherein an angle αbetween connection lines from two ends of the cutting plane (1) to a center of the reinforcing ring (30) is less than or equal to 30° .

6. The storage tank according to claim 1, wherein a plurality of reinforcing rings (30) are arranged at intervals in an axial direction of the tank body (10).

7. The storage tank according to claim 1, wherein a distance between two adjacent reinforcing rings (30) at an end part of the tank body (10) is greater than or equal to a distance between two adjacent reinforcing rings (30) at a middle part of the tank body (10).

8. The storage tank according to claim 1, wherein the reinforcing ring (30) comprises a first vertical plate (31) and a second vertical plate (32) oppositely arranged in an axial direction of the tank body (10) and a connecting plate (33) arranged between the first vertical plate (31) and the second vertical plate (32), and at least part of an outer surface of the connecting plate (33) forms the cutting plane (1).

9. The storage tank according to claim 8, wherein the reinforcing ring (30) comprises a cutting segment (34) and an arc segment (35), the cutting plane (1) is located on the cutting segment (34), and the cutting segment (34) is in welded connection with the arc segment (35).

10. A tank truck, comprising:
a truck body; and
a storage tank, arranged on the truck body, wherein the storage tank is the storage tank according to any one of claims 1 to 9.
